# EUROPEAN PATENT SPECIFICATION

(11) **EP 0 393 862 B1**
(45) Date of publication and mention of the grant of the patent: **28.02.1996**
(21) Application number: 90303324.9
(22) Date of filing: 28.03.1990
(51) Int. Cl.: G11B 17/08, G11B 17/22, G11B 5/82, G11B 25/04

(54) **Disk drive with disk stack assembly**
Plattengerät mit Plattenstapelanordnung
Entraînement de disque avec assemblage de disques superposés

(30) Priority: 17.04.1989 US 339282
(43) Date of publication of application: 24.10.1990
(73) Proprietor: International Business Machines Corporation, Armonk, N.Y. 10504 (US)
(72) Inventor: Brooks, Peter Everett, Rochester, Minnesota 55904 (US); Jan, Kimberly Graf, Rochester, Minnesota 55901 (US)
(74) Representative: Moss, Robert Douglas

(56) References cited:
- US-A- 3 587 073
- PATENT ABSTRACTS OF JAPAN, unexamined applications, P fields, vol. 7, no. 278, December 10, 1983 THE PATENT OFFICE JAPANESE GOVERNMENT page 119 P 242

## Description

This invention pertains to disk drives and more particularly to a disk stack assembly structure for such devices.

### Background of the invention

A conventional rigid magnetic disk data storage device such as that described in EP-A-0166118 has a disk stack assembly with a series of disks mounted for rotation on a hub. The disks are separated by spacers and retained on the hub by a clamp. To achieve the highest possible volumetric density of data in such devices, the greatest areal storage density on the disk surfaces and the maximum number of disks are used. The spacing between disks is reduced to the minimum required for the functioning of the transducer head, its suspension and the actuator arm on which the head-suspension assembly is mounted. A further step is to reduce the thickness of the disks.

Having optimized the above parameters, the ability of the disk stack clamping to maintain the disks flat, parallel and free of deformation becomes critical. For a given clamping force on the disk stack, concentrated loads will tend to cause more severe disk deformation than distributed loads. One typical distortion mode is coning (or cupping) of the disks. Distortion has been observed on industry standard thickness disks and is more severe still on reduced thickness disks. The coning of the disks is detrimental because it affects the fly height of the heads. With the higher bit densities and lower fly heights required by high density thin disks, ensuring the flatness of the disks in the disk stack assembly and solving the problems of disk distortion due to concentrated disk stack clamping forces and the low residual clamp loads of a single spring element system is becoming increasingly important.

The use of a flexible clamp ring to reduce disk distortion is disclosed in US-A-3587073, but relatively little attention appears to have been paid to the design of the spacers in relation to this problem. US-A-4819105 discloses a disk drive with U-shaped spacers, with the legs of the U parallel to the disk axis, but this is to reduce the mass of the spacers and to help airflow through the disk stack. US-A-3587073 has a groove on the inner radial surface of each of the spacers. JP-A-58-155519 describes a disk drive in which the spacer has an outer circumference tilted to the centre shaft of the spindle. The shape of the spacer helps to prevent airflow separating from the surface of the spacer and causing turbulence over the disk.

### Disclosure of the Invention

Accordingly, the invention provides for a disk drive including a disk stack assembly with:
at least two axially aligned disks;
an annular spacer separating said at least two axially aligned disks, said spacer adjoining the inner diameter of said disks and having an annular groove; and
clamping means maintaining a compressive retaining force on said at least two disks and said spacer;
said disk drive being characterised in that:
said annular groove extends radially inward from the outer surface of said spacer and has an approximately U-shaped cross-section in the plane containing both the disk stack axial and radial directions, with the legs of the U-shape extending radially outwards.

The width and depth of the annular groove imparting the U-shaped cross-section to the spacer depend on factors such as disk thickness, load application point and clamping force. The groove allows the spacer to behave similarly to a cantilever spring when a load is applied adjacent the outer diameter of the spacer.

In the disk stack assembly, a concentrated load is applied to the top disk and the bottom disk. The grooved spacer, by acting like a spring, causes this applied concentrated load to become a distributed load more rapidly than if the spacer did not possess the groove. The distributed load is highest at the outside diameter and decreases toward the inside diameter of the spacer ring. This distribution of the concentrated load will counterbalance the natural deflection of the disk, permitting the top and bottom disks to be flat when clamped in the disk stack assembly.

Preferably the clamping means comprises a hub that passes through an axial hole in the disks and spacer, and a clamp ring concentric with the disks having a thermal shrink fit connection with the hub. A first support surface on a flange extending from the hub and a second support surface on the clamp ring maintain the compressive retaining force on the disks and spacer therebetween. Preferably the inner radial diameter of the first and second support surfaces is aligned with the outer radial diameter of the spacer inside the groove. It is further preferred that there is a gap between the outer radial surface of the hub and the inner radial surface of the disks and of the spacer, so that the hub outer surface does not contact the disks or the spacer during thermal expansion or contraction.

The invention is of benefit both in disk drives that have only one pair of disks and a single spacer, and also in those that have three or more disks in the disk stack assembly, each separated by an annular spacer. In the latter case it is preferred that there is an annular groove extending radially inwards from the outer surface of every annular spacer. This leads to the concentrated load tending to distribute itself further as it is transferred to the central disks and spacers in the stack, becoming nearly a uniformly distributed load. This load does not deflect the spacer as much as a concentrated load because more oi the load is acting on a part of the spacer that is not a spring element. Thus, the central disks in the disk stack assembly remain flat.

When several disks and spacers are present however, it is the spacers between the two disks at each axial end of the disk stack that have the greatest role in transforming the load on the disks from a concentrated load into a distributed load. It may therefore sometimes be possible to just have annular grooves in these end spacers, rather than in every spacer, and still eliminate distortion effectively. Clearly this depends on exactly how much distortion the system can tolerate.

### Brief description of the drawings

Fig. 1 is a radial sectional view of a magnetic disk stack assembly from a disk drive according to the invention; and
Fig. 2 is an exploded radial sectional view of the disk stack assembly of Fig. 1 showing the clamping load distribution within the clamped components of the disk stack.

### Detailed Description

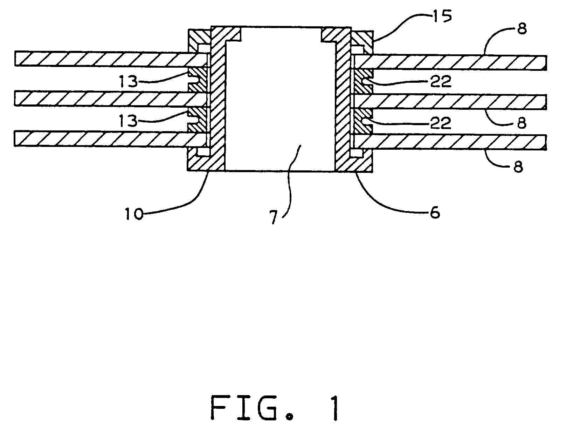

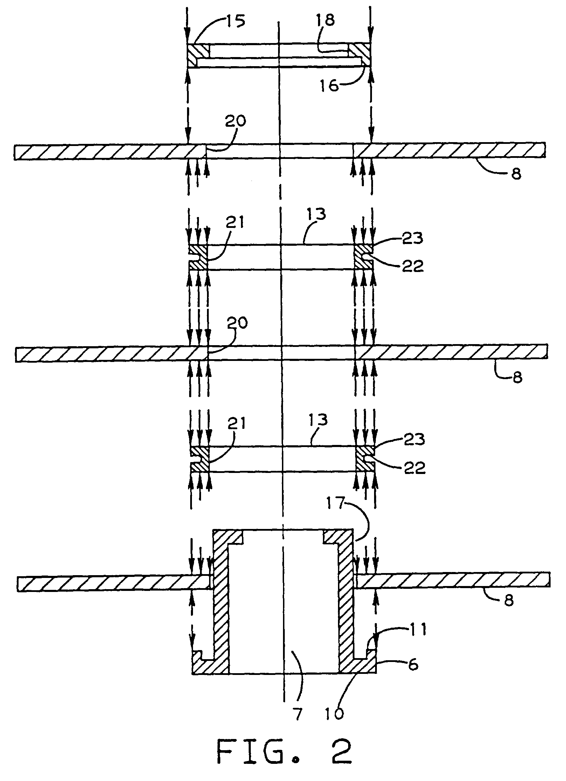

A disk stack assembly from a magnetic disk drive is illustrated in Fig. 1 as a three disk stack mounted on a hub 6. The hub 6 includes a space 7 concentrically within the stack of disks 8 that contains the spindle motor (not shown). Thus, the hub 6 not only supports the disks 8, but also functions as the housing for the spindle motor rotor. The hub 6 has a lower flange 10 which presents an annular support surface 11 (Fig. 2) upon which the lowermost disk 8 of the stack is supported. Between each adjoining pair of disks is a spacer ring 13 and at the top of the stack a clamp ring 15 presents a second, downwardly facing support surface 16. The stack of disks 8 and spacer rings 13 are clamped and held captive between the hub annular support surface 11 and the clamp ring annular support surface 16.

The clamp ring 15 has an inner diameter 18 that is slightly smaller than the outer diameter 17 of the top of hub 6 and is assembled to the hub by being heated to expand the inner diameter 18, being placed about the hub outer surface 17 while simultaneously applying an axial force to the stack, and then being allowed to cool to establish an interference fit with the hub outer surface that clamps the disks 8 and spacers 13 in position, maintaining the desired axial retaining force upon the disk stack (this clamping technique is taught in EPA 0166118).

It will also be noted that a clearance is maintained between the inner diameter 20 of the disks, the inner diameter 21 of the spacers and the outer substantially cylindrical wall surface 17 of the hub 6. This avoids the imposition of forces and dislocations that might occur due to physical contact between such parts during temperature changes.

The disk spacers 13 are provided with an annular groove 22, centrally positioned with respect to the outer cylindrical surface 23 and radially inwardly extending therefrom. The width and depth of the groove 22 are tailored to the disk thickness, axial load application location and clamping force. When a load is applied near the outer diameter of spacer 13, the groove 22 permits the spacer to function in a manner similar to a cantilever spring.

With the disk stack in the assembled condition, a concentrated load is applied to the disk stack between the hub flange annular support surface 11 and the clamp ring annular support surface 16. The grooved spacer 13, functioning like a spring, causes the concentrated load to become a distributed load more rapidly than would be possible if a solid ring shaped spacer were used. The distributed load is highest at the spacer ring outer diameter 23 and decreases toward the spacer inner diameter 21 to cause the concentrated load to counterbalance the natural deflection of the disk 8 at each axial end of the stack. The top and bottom disks of the stack thereby remain flat and parallel to the other disks of the stack, overcoming the coning or cupping distortion common to the clamping of axially aligned clamped disks.

Although the embodiment of the invention shown in Figs. 1 and 2 has for simplicity only three disks, the technique can also be applied to much larger disk stacks, with 8, 10 or 12 disks for example, with close spacing between disks and reduced thickness disk media. The concentrated load tends to be further distributed as it is transferred to disks at the centre of the stack to approach a uniformly distributed load. This more uniformly distributed load does not deflect the spacer as much as the concentrated load, since more of the load is acting on a part of the spacer that is not functioning as a spring element. Thus disks in the centre of the stack maintain their flat planar configuration.

The load distribution is illustrated by the position and length of the arrows in Fig. 2. The support surfaces 11, 16 of the hub 6 and the clamp ring 15 respectively impart a concentrated load largely at the outside diameters of the support surfaces. The grooved spacer rings 13 cause the concentrated load at the axial ends of the stack to be distributed from the outer radius to the inner radius of the spacer through the spring like function of the annular spacer projections adjoining the groove. As the axial compressive load is transferred to the disks beyond those at the axial ends of the stack, the loading approaches a uniform distribution from the outside diameter to the inside diameter of the spacer ring 13. Thus the use of the grooved spacers overcomes the tendency of the disks at the axial ends of the stack to be distorted through coning or cupping and does not distort the disks at the centre of the stack, maintaining their flat planar disposition.

In the embodiment shown in Figs. 1 and 2, the depth of the groove 22 is 1 millimetre and the radial width of the clamp ring and hub annular support surfaces is 1 millimetre. Thus, the groove and the support surfaces are aligned and coextensive; however, this common dimension is exemplary only and would not necessarily be applicable to other combinations of disk thickness, load magnitude and location of application.

The grooved spacer rings 13 also provide a cylindrical surface 23 with a locating groove 22 that can be used for automated handling and manipulation of the disk stack assembly during manufacture of the head-disk assembly.

## Claims

1. A disk drive including a disk stack assembly with:
at least two axially aligned disks (8);
an annular spacer (13) separating said at least two axially aligned disks, said spacer adjoining the inner diameter of said disks and having an annular groove (22); and
clamping means (6, 15) maintaining a compressive retaining force on said at least two disks and said spacer;
said disk drive being characterised in that:
said annular groove (22) extends radially inward from the outer surface (23) of said spacer and has an approximately U-shaped cross-section in the plane containing both the disk stack axial and radial directions, with the legs of the U-shape extending radially outwards.

2. A disk drive as claimed in claim 1, wherein said clamping means comprises a hub (6) that passes through an axial hole in said spacer and each of said axially aligned disks, said hub including a flange (10) that presents a first support surface (11) for said disks.

3. A disk drive as claimed in claim 2, wherein the inner radial surfaces (20, 21) of said axially aligned disks and spacer are separated from the outer radial surface (17) of said hub, so that said hub outer surface does not contact said disks or said spacers during thermal expansion or contraction.

4. A disk drive as claimed in claim 2 or claim 3, wherein said clamping means further comprises a clamp ring (15) presenting a second support surface (16) for said disks, said clamp ring having a thermal shrink fit connection around said hub such that said first and second support surfaces maintain said compressive retaining force on said disks and said spacer.

5. A disk drive as claimed in claim 4, wherein said annular groove has a depth such that the outer radial diameter of said spacer inside said annular groove is no larger than the inner radial diameter of said first and second support surfaces.

6. A disk drive has claimed in claim 5, wherein the inner radial diameter of said first and second support surfaces is axially aligned with the outer radial diameter of said spacer inside said annular groove.

7. A disk drive as claimed in any preceding claim, having at least three axially aligned disks, wherein annular spacers are alternated with said axially aligned disks such that there is an annular spacer between each adjoining pair of disks, with an annular groove extending radially inwards in at least the annular spacers that separate the last two disks at each axial end of the disk stack assembly.

8. A disk drive as claimed in claim 7, wherein there is an annular groove extending radially inwards from the outer surface of every annular spacer.

9. The use, in a disk drive including a disk stack assembly with:
at least two axially aligned disks (8);
an annular spacer (13) separating said at least two axially aligned disks, said spacer adjoining the inner diameter of said disks and having an annular groove (22) extending radially inward from the outer surface (23) of said spacer; and
clamping means (6, 15) maintaining a compressive retaining force on said at least two disks and said spacer;
of the spacer with the annular groove extending radially inward from its outer surface to distribute the compressive retaining force from the clamping means from a concentrated load to a more uniform load, thereby reducing the tendency of the disks to distort.

10. The use of a disk drive as claimed in claim 9, wherein said clamping means comprises a hub (6) that passes through an axial hole in said spacer and each of said axially aligned disks, said hub including a flange (10) that presents a first support surface (11) for said disks.

11. The use of a disk drive as claimed in claim 10, wherein the inner radial surfaces (20, 21) of said axially aligned disks and spacer are separated from the outer radial surface (17) of said hub, so that said hub outer surface does not contact said disks or said spacers during thermal expansion or contraction.

12. The use of a disk drive as claimed in claim 10 or claim 11, wherein said clamping means further comprises a clamp ring (15) presenting a second support surface (16) for said disks, said clamp ring having a thermal shrink fit connection around said hub such that said first and second support surfaces maintain said compressive retaining force on said disks and said spacer.

13. The use of a disk drive as claimed in claim 12, wherein said annular groove has a depth such that the outer radial diameter of said spacer inside said annular groove is no larger than the inner radial diameter of said first and second support surfaces.

14. The use of a disk drive as claimed in claim 13, wherein the inner radial diameter of said first and second support surfaces is axially aligned with the outer radial diameter of said spacer inside said annular groove.

15. The use of a disk drive as claimed in any of claims 9 to 14, wherein said annular spacer has an approximately U-shaped cross-section in the plane containing both the disk stack axial and radial directions, with the legs of the U-shape extending radially outwards.

16. The use of a disk drive as claimed in any of claims 9 to 15, having at least three axially aligned disks, wherein annular spacers are alternated with said axially aligned disks such that there is an annular spacer between each adjoining pair of disks, with an annular groove extending radially inwards in at least the annular spacers that separate the last two disks at each axial end of the disk stack assembly.

17. The use of a disk drive as claimed in claim 16, wherein there is an annular groove extending radially inwards from the outer surface of every annular spacer.

## Patentansprüche

1. Ein Plattenlaufwerk mit einer Plattenstapelanordnung mit:
mindestens zwei axial ausgerichteten Platten (8);
einem ringförmigen Distanzstück (13), das die genannten mindestens zwei axial ausgerichteten Platten voneinander trennt, wobei das genannte Distanzstück an den inneren Durchmesser der genannten Platten anschließt und eine ringförmige Nut (22) aufweist; und
Spannmittel (6, 15), die auf die genannten mindestens zwei Platten und das genannte Distanzstück eine Druck-Haltekraft ausüben;
wobei das genannte Plattenlaufwerk dadurch gekennzeichnet ist, daß:
die genannte ringförmige Nut (22) von der Außenfläche (23) des genannten Distanzstücks radial nach innen verläuft und in der Ebene, die sowohl die axiale als auch die radiale Richtung des Plattenstapels umfaßt, einen annähernd U-förmigen Querschnitt aufweist, wobei die Schenkel der U-Form radial nach außen weisen.

2. Ein Plattenlaufwerk nach Anspruch 1, bei dem das genannte Spannmittel eine Nabe (6) umfaßt, die durch eine axiale Bohrung in dem genannten Distanzstück und jede der axial ausgerichteten Platten verläuft, wobei die genannte Nabe einen Flansch (10) umfaßt, der für die genannten Platten eine erste Auflagefläche (11) darstellt.

3. Ein Plattenlaufwerk nach Anspruch 2, bei dem die inneren radialen Oberflächen (20, 21) der genannten axial ausgerichteten Platten und des Distanzstücks von der äußeren radialen Oberfläche (17) der genannten Nabe getrennt sind, so daß die genannte äußere Oberfläche der Nabe mit den genannten Platten oder den genannten Distanzstücken bei einer Wärmeausdehnung oder Wärmekontraktion nicht in Kontakt kommt.

4. Ein Plattenlaufwerk nach Anspruch 2 oder Anspruch 3, bei dem das genannte Spannmittel weiter einen Spannring (15) umfaßt, der für die genannten Platten eine zweite Auflagefläche (16) darstellt, wobei der genannte Spannring auf der genannten Nabe mittels einer Schrumpfpassung unter Wärmeeinwirkung montiert wurde, so daß die genannte erste und die genannte zweite Auflagefläche die genannte Druck-Haltekraft auf die genannten Platten und das genannte Distanzstück aufrechterhalten.

5. Ein Plattenlaufwerk nach Anspruch 4, bei dem durch die Tiefe der genannten ringförmigen Nut erreicht wird, daß der äußere radiale Durchmesser des genannten Distanzstücks innerhalb der genannten ringförmigen Nut nicht größer ist, als der innere radiale Durchmesser der genannten ersten und zweiten Auflagefläche.

6. Ein Plattenlaufwerk nach Anspruch 5, bei dem der innere radiale Durchmesser der genannten ersten und zweiten Auflagefläche axial mit dem äußeren radialen Durchmesser des genannten Distanzstücks innerhalb der genannten ringförmigen Nut ausgerichtet ist.

7. Ein Plattenlaufwerk nach einem der vorangehenden Ansprüche, mit mindestens drei axial ausgerichteten Platten, bei dem die ringförmigen Distanzstücke mit den genannten axial ausgerichteten Platten abwechseln, so daß zwischen jeweils einem benachbarten Plattenpaar ein ringförmiges Distanzstück liegt, wobei eine ringförmige Nut zumindest in den ringförmigen Distanzstücken, welche die beiden letzten Platten an jedem axialen Ende der Plattenstapelanordnung voneinander trennen, radial nach innen verläuft.

8. Ein Plattenlaufwerk nach Anspruch 7, bei dem eine ringförmige Nut von der Außenfläche jedes ringförmigen Distanzstücks radial nach innen verläuft.

9. Der Einsatz des Distanzstücks mit der ringförmigen Nut, die von seiner Außenfläche radial nach innen verläuft, um die Druck-Haltekraft des Spannmittels von einer konzentrierten Last in eine gleichmäßigere Last zu verteilen, und dadurch das Risiko einer Verformung der Platten zu reduzieren, in einem Plattenlaufwerk, das eine Plattenstapelanordnung umfaßt, mit:
mindestens zwei axial ausgerichteten Platten (8);
einem ringförmigen Distanzstück (13), das die genannten mindestens zwei axial ausgerichteten Platten voneinander trennt, wobei das genannte Distanzstück an den inneren Durchmesser der genannten Platten anschließt und eine ringförmige Nut (22) aufweist, die von der Außenfläche (23) des genannten Distanzstücks radial nach innen verläuft; und
Spannmitteln (6, 15), die auf die genannten mindestens zwei Platten und das genannte Distanzstück eine Druck-Haltekraft ausüben.

10. Der Einsatz eines Plattenlaufwerks nach Anspruch 9, bei dem das genannte Spannmittel eine Nabe (6) umfaßt, die durch eine axiale Bohrung in dem genannten Distanzstück und jede der genannten axial ausgerichteten Platten verläuft, wobei die genannte Nabe einen Flansch (10) umfaßt, der für die genannten Platten eine erste Auflagefläche (11) darstellt.

11. Der Einsatz eines Plattenlaufwerks nach Anspruch 10, bei dem die inneren radialen Oberflächen (20, 21) der genannten axial ausgerichteten Platten und des Distanzstücks von der äußeren radialen Oberfläche (17) der genannten Nabe getrennt sind, so daß die genannte äußere Oberfläche der Nabe mit den genannten Platten oder den genannten Distanzstücken bei einer Wärmeausdehnung oder Wärmekontraktion nicht in Kontakt kommt.

12. Der Einsatz eines Plattenlaufwerks nach Anspruch 10 oder Anspruch 11, bei dem das genannte Spannmittel weiter einen Spannring (15) umfaßt, der für die genannten Platten eine zweite Auflagefläche (16) darstellt, wobei der genannte Spannring auf der genannten Nabe mittels einer Schrumpfpassung unter Wärmeanwendung montiert ist, so daß die genannte erste und zweite Auflagefläche die genannte Druck-Haltekraft auf die genannten Platten und das genannte Distanzstück aufrechterhält.

13. Der Einsatz eines Plattenlaufwerks nach Anspruch 12, bei dem die Tiefe der genannten ringförmigen Nut so beschaffen ist, daß der äußere radiale Durchmesser des genannten Distanzstücks innerhalb der genannten ringförmigen Nut nicht größer ist, als der innere radiale Durchmesser der genannten ersten und zweiten Auflagefläche.

14. Der Einsatz eines Plattenlaufwerks nach Anspruch 13, bei dem der innere radiale Durchmesser der genannten ersten und zweiten Auflagefläche axial mit dem äußeren radialen Durchmesser des genannten Distanzstücks innerhalb der genannten ringförmigen Nut ausgerichtet ist.

15. Der Einsatz eines Plattenlaufwerks nach einem der Ansprüche 9 bis 14, bei dem das genannte ringförmige Distanzstück in der Ebene, die sowohl die axiale als auch die radiale Richtung des Plattenstapels umfaßt, einen annähernd U-förmigen Querschnitt aufweist, wobei die Schenkel der U-Form radial nach außen weisen.

16. Der Einsatz eines Plattenlaufwerks nach einem der Ansprüche 9 bis 15, mit mindestens drei axial ausgerichteten Platten, bei dem ringförmige Distanzstücke mit den genannten axial ausgerichteten Platten abwechseln, so daß zwischen jeweils einem benachbarten Plattenpaar ein ringförmiges Distanzstück liegt, wobei zumindest bei den ringförmigen Distanzstücken, die die beiden letzten Platten an jedem axialen Ende der Plattenstapelanordnung voneinander trennen, eine ringförmige Nut radial nach innen verläuft.

17. Der Einsatz eines Plattenlaufwerks nach Anspruch 16, bei dem eine ringförmige Nut von der Außenfläche jedes ringförmigen Distanzstücks radial nach innen verläuft.

## Revendications

1. Unité d'entraînement de disque comprenant un assemblage de disques superposés avec:
au moins deux disques alignés axialement (8);
une entretoise annulaire (13) séparant lesdits au moins deux disques alignés axialement, ladite entretoise étant contiguë au diamètre interne desdits disques et ayant une rainure annulaire (22); et
des moyens de serrage (6, 15) maintenant une force de retenue compressive sur lesdits au moins deux disques et ladite entretoise;
ladite unité d'entraînement de disque étant caractérisée en ce que:
ladite rainure annulaire (22) s'étend radialement vers l'intérieur à partir de la surface externe (23) de ladite entretoise et a approximativement une section transversale en forme de U dans le plan contenant les directions axiale ainsi que radiale des disques superposés, les jambages du U s'étendant radialement vers l'extérieur.

2. Unité d'entraînement de disque selon la revendication 1, dans laquelle les moyens de serrage comportent un moyeu (6) qui passe par un trou axial fait dans ladite entretoise et chacun desdits disques alignés axialement, ledit moyeu comprenant un rebord (10) qui présente une première surface d'appui (11) pour lesdits disques.

3. Unité d'entraînement de disque selon la revendication 2, dans laquelle les surfaces internes radiales (20, 21) desdits disques et entretoise alignés axialement sont séparées de la surface radiale externe (17) dudit moyeu pour que ladite surface externe du moyeu ne fasse pas contact avec lesdits disques ou lesdites entretoises durant une dilatation ou contraction thermique.

4. Unité d'entraînement de disque selon la revendication 2 ou la revendication 3, dans laquelle lesdits moyens de serrage comportent en outre une bague de fixation (15) présentant une deuxième surface d'appui (16) auxdits disques, ladite bague de fixation ayant une connexion d'ajustage serré par retrait thermique autour dudit moyeu de sorte que lesdites première et deuxième surfaces d'appui maintiennent ladite force de retenue compressive sur lesdits disques et ladite entretoise.

5. Unité d'entraînement de disque selon la revendication 4, dans laquelle ladite rainure annulaire a une profondeur telle que le diamètre radial externe de ladite entretoise à l'intérieur de ladite rainure annulaire ne soit pas plus grand que le diamètre radial interne desdites première et deuxième surfaces d'appui.

6. Unité d'entraînement de disque selon la revendication 5, dans laquelle le diamètre radial interne desdites première et deuxième surfaces d'appui est aligné axialement avec le diamètre radial externe de ladite entretoise à l'intérieur de ladite rainure annulaire.

7. Unité d'entraînement de disque selon l'une quelconque des revendications précédentes, ayant au moins trois disques alignés axialement, dans laquelle des entretoises annulaires alternent avec lesdits disques alignés axialement pour qu'il y ait une entretoise annulaire entre chaque paire contiguë de disques, une rainure annulaire s'étendant radialement vers l'intérieur dans au moins les entretoises annulaires qui séparent les deux derniers disques à chaque extrémité axiale de l'assemblage de disques superposés.

8. Unité d'entraînement de disque selon la revendication 7, dans laquelle il y a une rainure annulaire qui s'étend radialement vers l'intérieur depuis la surface externe de chaque entretoise annulaire.

9. Utilisation, dans une unité d'entraînement de disque comprenant un assemblage de disques superposés, avec:
au moins deux disques alignés axialement (8);
une entretoise annulaire (13) séparant lesdits au moins deux disques alignés axialement, ladite entretoise étant contiguë au diamètre interne desdits disques et ayant une rainure annulaire (22) s'étendant radialement vers l'intérieur depuis la surface externe (23) de ladite entretoise; et
des moyens de serrage (6, 15) maintenant une force de retenue compressive sur lesdits au moins deux disques le ladite entretoise;
d'une entretoise ayant une rainure annulaire qui s'étend radialement vers l'intérieur à partir de la surface externe afin de répartir la force de retenue compressive depuis les moyens de serrage, d'une charge concentrée en une charge plus uniforme, réduisant de ce fait toute tendance des disques à se déformer.

10. Utilisation d'une unité d'entraînement de disque selon la revendication 9, dans laquelle lesdits moyens de serrage comportent un moyeu (6) qui passe par un trou axial fait dans ladite entretoise et chacun desdits disques axialement alignés, ledit moyeu comprenant un rebord (10) qui présente une première surface d'appui (11) pour lesdits disques.

11. Utilisation d'une unité d'entraînement de disque selon la revendication 10, dans laquelle les surfaces radiales internes (20, 21) desdits disques et entretoise alignés axialement sont séparées de la surface radiale externe (17) dudit moyeu pour que ladite surface externe du moyeu ne fasse pas contact avec lesdits disques ou lesdites entretoises durant une dilatation ou contraction thermique.

12. Utilisation d'une unité d'entraînement de disque selon la revendication 10 ou la revendication 11, dans laquelle lesdits moyens de serrage comportent en outre une bague de fixation (15) présentant une deuxième surface d'appui (16) auxdits disques, ladite bague de fixation ayant une connexion d'ajustage serré par retrait thermique autour dudit moyeu pour que lesdits première et deuxième surfaces d'appui maintiennent ladite force de retenue compressive sur lesdits disques et ladite entretoise.

13. Utilisation d'une unité d'entraînement de disque selon la revendication 12, dans laquelle ladite rainure annulaire a une profondeur telle que le diamètre radial externe de ladite entretoise à l'intérieur de ladite rainure annulaire ne soit pas plus grand que le diamètre radial interne desdites première et deuxième surfaces d'appui.

14. Utilisation d'une unité d'entraînement de disque selon la revendication 13, dans laquelle le diamètre radial interne desdites première et deuxième surfaces d'appui est aligné axialement avec le diamètre radial externe de ladite entretoise à l'intérieur de ladite rainure annulaire.

15. Utilisation d'une unité d'entraînement de disque selon l'une quelconque des revendications 9 à 14**,** dans laquelle ladite entretoise annulaire a une section transversale approximativement en forme de U dans le plan contenant à la fois les directions axiale et radiale des disques superposés, les jambages du U s'étendant radialement vers l'extérieur.

16. Utilisation d'une unité d'entraînement de disque selon l'une quelconque des revendications 9 à 15, ayant au moins trois disques alignés axialement, dans laquelle des entretoises annulaires alternent avec lesdits disques alignés axialement pour qu'il y ait une entretoise annulaire entre chaque paire contiguë de disques, une rainure annulaire s'étendant radialement vers l'intérieur dans au moins les entretoises annulaires qui séparent les deux derniers disques à chaque extrémité axiale de l'assemblage de disques superposés.

17. Utilisation d'une unité d'entraînement de disque selon la revendication 16, dans laquelle il y a une rainure annulaire qui s'étend radialement vers l'intérieur depuis la surface externe de chaque entretoise annulaire.
